# EUROPEAN PATENT SPECIFICATION

(11) **EP 0 760 834 B1**
(45) Date of publication and mention of the grant of the patent: **14.10.1998**
(21) Application number: 94923244.1
(22) Date of filing: 24.06.1994
(51) Int. Cl.: C08L 75/04, D06N 3/14

(54) **WATER VAPOR PERMEABLE, AIR IMPERMEABLE FILM AND COMPOSITE COATINGS AND LAMINATES**
WASSERDAMPFDURCHLAESSIGE, LUFTDICHTE SCHICHT UND VERBUNDBESCHICHTUNGEN UND VERBUNDSTRUKTUREN
FILM PERMEABLE A LA VAPEUR D'EAU ET IMPERMEABLE A L'AIR, AINSI QUE REVETEMENTS ET STRATIFIES COMPOSITES

(30) Priority: 26.05.1994 US 249912
(43) Date of publication of application: 12.03.1997
(73) Proprietor: W.L. GORE & ASSOCIATES, INC., Newark, Delaware 19714-9206 (US)
(72) Inventor: DUTTA, Anit, Wilmington, DE 19808 (US)
(74) Representative: Kador & Partner
(86) International application number: US9407162
(87) International publication number: WO9533007

(56) References cited:
- EP-A- 0 193 808
- EP-A- 0 238 991
- EP-A- 0 411 236
- EP-A- 0 460 608
- EP-A- 0 523 806
- DATABASE WPI Week 8635, Derwent Publications Ltd., London, GB; AN 229633 'WATER RESISTANT MOISTURE PERMEABLE FABRIC PRODUCTION' & JP,A,61 160 480 (TORAY) 21 July 1986

## Description

### FIELD OF THE INVENTION

This invention relates to water vapor permeable, air impermeable films and laminates suitable for articles of clothing and medical dressing. More specifically, the films and laminates have hydrophilic absorbent particles present which surprisingly increases the water vapor transmission rate.

### BACKGROUND OF THE INVENTION

Depending on their specific end use, protective clothing articles are designed to provide protection in wet conditions e.g., rain or snow, during outdoor activities such as skiing, biking, hiking, etc. in handling hazardous chemicals; in avoiding infection, in preventing contamination, and the like. To make such protective clothing articles, it has been common to impregnate or coat fabrics with coatings to form a non-porous polymeric film which acts as the barrier layer providing the protection. Alternatively, a non-porous polymer film can be laminated to a fabric to provide such a barrier. In most cases, the non-porous barrier layer does not allow for evaporation of perspiration thereby making the user of the clothing uncomfortable. Such materials are commonly referred to as "non-breathable".

There is protective clothing that uses a barrier layer which is "breathable", i.e. which allows water vapor to pass through. These materials are more comfortable to the wearer since water vapor in the form of perspiration from the skin can pass through the clothing and escape to the outside.

One approach in making "breathable" protective clothing is to use a non-porous continuous polymer film that is also breathable as the barrier layer. In this case, the barrier layer allows permeation of water vapor while being impervious to wind, particulates, microorganisms, liquid water, etc.

Another approach to making "breathable" protective clothing is to use a barrier layer that is a composite comprising of a microporous air permeable polymer layer impregnated with a water vapor permeable polymer. U.S. Patent 4,194,041, Gore, et al., describes coatings or laminates that provide waterproof articles which do not leak when touched and are breathable. This patent describes layered articles for use in waterproof garments or tents comprising at least two layers; an interior, continuous hydrophilic layer that allows water to diffuse therethrough, prevents the transport of surface active agents and contaminating substances such as those found in perspiration, and is substantially resistant to pressure induced flow of liquid water; and a hydrophobic layer that permits the transmission of water vapor. The hydrophobic layer is preferably waterproof microporous polytetrafluoroethylene (PTFE) or polypropylene, which permits the passage of moisture vapor through the pores thereof. The hydrophilic layer transfers moisture vapor therethrough whereupon the vapor then passes through the porous hydrophobic layer. Various means of joining the layers are suggested including the application of hydraulic pressure to force the hydrophilic polymer to penetrate into the surface void spaces of the hydrophobic layer.

U.S. Patent 4,443,511 to Worden, et al. discloses a layered article similar to that of U.S. Patent 4,194,041, but formed of a breathable polytetrafluoroethylene first layer mechanically stretched at least about 5% beyond its yield point having a surface layer of elastomeric hydrophilic material having a surface in interlocking relationship with the inner face of the first layer. The interlocking relationship is said to be brought about by flowing the hydrophilic elastomeric material into the layer of hydrophobic material and then solidifying the hydrophilic material.

U.S. Patent 4,961,985 to Henn describes a coated article for use as fabric for clothing. The coating is a microporous scaffold material having a high void content, filled with a water vapor transmitting polyurethane.

U.S. patent 4,613,544 to Burleigh describes a waterproof, moisture vapor permeable unitary sheet material comprising a microporous polymeric matrix having pores comprising continuous passages extending through its thickness and opening into the opposite surfaces thereof, the passages being sufficiently filled with a moisture vapor permeable, water impermeable, hydrophilic material to prevent the passage of water and other liquids through the unitary sheet material while readily permitting moisture vapor transmission therethrough rendering the sheet material breathable. The unitary sheet is made by causing a liquid composition comprising the hydrophilic material or precursor thereof to flow into the pores of the matrix, then causing the conversion thereof to solid hydrophilic material.

In all these patents, protection from elements like wind, rain, snow, particulates, hazardous liquids, microorganisms, etc. is provided by a non-porous polymeric material which is permeable to water vapor. Since permeation of water vapor occurs by the solution-diffusion mechanism (see, for instance, Vieth, W.R., Diffusion In And Through Polymers, Hanser Publishers, 1991 and Koros,W.J., Barrier Polymers & Structures, ACS Symposium Series 423, American Chemical Society, 1990), the moisture vapor transmission rate is strongly dependent on several factors including the thickness of the non-porous polymer layer. In particular, as the thickness of the non-porous polymer layer is increased, there is a reduction in the water vapor transmission rate (WVTR). Therefore, in practical application, effort is made to keep this layer at its minimum thickness to obtain maximum WVTR without sacrificing the other functional attributes such as windproofness, mechanical strength and liquid water penetration resistance. It would therefore be advantageous to improve the water vapor transmission characteristics of the polymer film used to form the non-porous barrier layer without compromising its other functional attributes of air impermeability and waterproofness.

The use of hydrophilic absorbent particles in making body-fluid absorbing articles is well known in the art. For example, U.S. Patent 4,460,642 to Errede et al., describes a composite sheet material which is highly absorbent toward aqueous fluids including blood and exudate and comprises a polytetrafluoroethylene fibril matrix and hydrophilic absorptive particles enmeshed in the matrix. The composite sheet material is useful as a wound dressing. The composite sheet material of this patent is porous and hence is permeable to air and other microorganisms like viruses and bacteria.

U.S. Patent 5,098,775 to Harada et al., describes a body fluid-absorbing article composed of a liquid-permeable front-surface member, a liquid-impermeable polyethylene film, and a fibrous absorbent member nipped therebetween. Owing to the very low moisture vapor transmission rate of the polyethylene film, the layered article of this invention is expected to be essentially non-breathable thereby leading to discomfort to the user in prolonged use of the article. U.S. Patent 5,043,209 to Boisse et al., describes an absorbent liner for non-breathable protective clothing for absorption of sweat. Since the entire clothing ensemble is not breathable, it is expected to become uncomfortable to the user on prolonged use as the absorbent liner becomes saturated with sweat.

It would therefore be desirable to be able to make body fluid-absorbing articles that are not only absorbent and air and/or liquid impermeable, but also has the desired property of high permeability to water vapor as measured by its water vapor transmission rate. This ability to adjust the WVTR of such articles would allow a better control of the desired microclimate in the immediate vicinity of the body for each specific end-use.

### SUMMARY OF THE INVENTION

It has now surprisingly been discovered that the water vapor transmission rate (WVTR) of a nonporous polymeric film can be increased by incorporating into it hydrophilic absorbent particles. Particles that absorb water are not known for an ability to increase water vapor transmission rates. The compositions of this invention provide for controlled increase in WVTR of the non-porous polymer film or of composites containing it which can be used in articles of protective clothing and medical dressing with balanced properties of protection and comfort to the user.

One material of the invention is in the form of a waterproof, air impermeable, water vapor permeable non-porous polymer film or sheet comprising a polymer resin and hydrophilic absorbent particles at least partially embedded therein having absorptive capacity greater than 1 gram of water per gram of dry (water-free) particles. The amount of the particles present is such that the WVTR of the film or sheet is higher than that of a comparable film of the polymer resin alone, in particular from 0.1 to 50 parts of hydrophilic particles per 100 parts of the polymeric resin, The film or sheet can be substantially planar in nature or can be in the form of a three-dimensional shaped article.

The polymer film or sheet of this invention, can be combined with other substrates like fabrics or porous membranes to form layered structures that are waterproof, air impermeable but water vapor permeable.

As used in this application:
"waterproof" shall be deemed to include "liquid water penetration resistant".
"breathable" shall be deemed to indicate the ability to pass moisture vapor.
by "hydrophilic" is meant that the material has a strong affinity for water.
by "hydrophilic absorbent" particles is meant that the particles absorb water.

### DETAILED DESCRIPTION OF THE INVENTION

If a continuous non-porous film of a polymer resin is exposed to air containing substantial water vapor on one side of the film, and to air containing less water vapor on the other side, the side exposed to the higher water vapor concentration will absorb water molecules which diffuse through the film and are desorbed or evaporated on the side exposed to the lower water vapor concentration. Thus, moisture is effectively transmitted through the film on a molecule by molecule basis. Under identical test conditions and film thickness, the water vapor transmission rate (WVTR) through a film is an inherent property of the polymer resin and is controlled by the polymer's chemistry.

The present invention provides for a continuous non-porous air impermeable polymer film with increased WVTR. The polymer film of this invention comprises of a polymer resin and hydrophilic absorbent particles such that the WVTR through the non-porous film of this invention is higher than that through a non-porous film of comparable thickness obtained only from the polymer resin.

The polymer resin can be chosen from a large variety of polymer resins. However, it should possess film forming properties, i.e., the polymer resin can be formed into a non-porous continuous film or a sheet using conventional techniques known in the art. The polymer resin may or may not be hydrophilic in nature depending on the WVTR desired for a particular end use. Typically, the more hydrophilic the polymer resin, the higher would be the WVTR through a non-porous film of the polymer resin. A convenient measure of the hydrophilic nature of a polymer resin is the amount of water absorbed by the unit weight of the polymer resin under specified conditions. ASTM D570 is such a standard test method for determination of water absorption of polymeric materials.

Other than film forming properties, the polymer resin can be derived from a wide variety of classes of polymers. The polymer resin can be either thermoplastic or thermosetting in nature. It is also possible that instead of a single polymer resin, a blend of two or more polymer resins is used. Some typical examples of preferred polymer resins are those made from poly(urethanes), poly(esters), poly(amides), copolyethersteramides, copolyesters, copolyetheresters, as homopolymers or as copolymers or as mixtures.

The polymer resin useful herein include block copolymers of either the polyurethane family or the copolyetheresteramide family or the copolyetherester family. The copolyetheresteramide polymers are a part of the general family of polyether block amide polymer chemistry as discussed in U.S. patent 4,230,838 to Foy et al. which also discusses the potential for formulating hydrophilic grades using poly(alkyleneoxide) glycol for the polyether block.

The preferred copolyester polymers are segmented copolyesters that contain recurring long chain ester units of a dicarboxylic acid and a long chain glycol, and also contains recurring short chain ester units of a dicarboxylic acid and a short chain glycol. The glycol can contain ether units, in which case the copolyester is sometimes referred to as a copolyetherester. The development of these polymers is described in U.S. Patent 4,493,870 to Vrouemraeto and U.S. Patent 4,725,481 to Ostapchenko describes compositions for hydrophilic copolyetherester polymers.

The preferred polyurethane polymers can be in different physical form, characterized principally on the basis of processing considerations. Preferably, the polyurethane polymers are either high molecular weight thermoplastics or relatively lower molecular weight prepolymers that are subsequently crosslinked to obtain the final polymer. These polyurethane polymers are segmented block copolymers based on a wide variety of precursors and are obtained by using different chemical routes.

It is well known in the art (see for instance, Hepbum, C., Polyurethane Elastomers, Applied Science Publishing Ltd., 1982 and Saunders S. Frisch, Polyurethanes chemistry and Technology, Part II Technology, Robert E. Krieger Publishing Company, 1983) that an isocyanate, a polyol and a chain extender are the building blocks generally used to make polyurethane polymers. Depending on the equivalency ratios employed using these building blocks, various characteristics are achieved that dictate both the processing techniques to be employed to achieve the final desired polymeric product, and the properties of the final polymer.

For example, a high molecular weight thermoplastic polyurethane is obtained when the equivalency ratio of the isocyanate species to that of the active hydrogen species (polyol and chain extender) is close to unity. Thus, thermoplastic polyurethanes are substantially centered around 50% equivalents of isocyanate. The thermoplastic route to a solid polyurethane can be subdivided into two categories: those completely soluble in certain solvents and containing no chemical crosslinks before and after processing, and those materials possessing no initial cross-links, but which form a lightly cross-linked structure after a heated post-cure. The former class is more predominantly encountered and is commonly made by the reaction of essentially equivalents of isocyanate and active hydrogen functionality or a slight excess of the active hydrogen component. Products from this class have the drawback in that they are inherently sensitive to particular solvents and will swell extensively in some solvents and dissolve in others. This limits their application in some areas of application such as coatings, adhesives and sealants.

In the latter class of thermoplastic polyurethanes, the synthesis is similar; however, a slight excess of isocyanate is employed to generate a final polymer having a small amount of unreacted isocyanate groups. These isocyanate groups are then available for cross-linking the final polymer through allophonate and biuret formation. The cross-link density is low by this method and the final thermoplastic polyurethane polymer must be given a heated post-cure to "activate" these residual "dormant" isocyanate groups.

The processing of either class of thermoplastic polyurethanes may proceed by melt processing techniques, as well as, by solution processing techniques. Melt processing, such as injection molding, extrusion, calendaring and film blowing are done usually at high temperatures. Solution processing usually involves solvating the thermoplastic polyurethane in very polar solvents such as tetrahydrofuran, dimethylformamide, dimethylsulfoxide, n-methyl pyrrolidone before using the polymer solution in processes such as coating, dipping, molding and spraying.

Polyurethane prepolymers, also useful in this invention, are obtained by employing an equivalency ratio of isocyanate species to the active hydrogen species which is considerably greater than one such that the prepolymer has unreacted isocyanate groups. The curing of these prepolymers can be achieved by different techniques. In a "two-package" system (see U.S. Patent 3,471,445 for example) the prepolymer is mixed with a chain extender. The reacting mixture is then fabricated into its final form by an appropriate technique such as spraying, coating, casting or molding, and complete curing is then achieved by a post-cure at temperatures in excess of 100°C for 3 to 24 hours. In a "one-package" method (see U.S. Patent 4,532,316 for example), the curing is achieved by chain extension of the prepolymer through the reaction of the isocyanate groups with water or ambient moisture and cross-linking by allophanate and biuret formation. In another "one-package" system (see U.S. Patent 5,209,969 for example), curing of the prepolymer is achieved by using a "blocked" isocyanate, in which a polyol is employed as a mixture of a polyisocyanate (block isocyanate) masked with a blocking agent. The mixture is storage stable at under normal ambient conditions, but upon heating to an elevated temperature the isocyanate groups are unblocked thereby allowing the groups to react with the available hydrogen species provided by the polyol and/or the chain extender.

The physical form of these polyurethane prepolymers ranges generally from a viscous liquid to a waxy, low melting solid, depending usually upon whether a polyether or polyester polyol has been employed, respectively. In general, polyether prepolymer systems do not exhibit any of their final physical properties until substantially along in the cure cycle. Many polyester prepolymer systems, due to inherent tendency of the polyester segment to crystallize, exhibit many of their final physical properties early in the cure cycle. The physical form of the polyurethane prepolymers allows these to be processed by conventional liquid/hot melt processing techniques such as coating, spraying, casting, dipping and molding without the need for using any organic solvents.

The polyurethane polymers useful in this invention can vary in the degree of their hydrophilic properties. It has been found in general, however, that for polyurethane polymers at the same amount of absorbent particle in the polymer composition, the percent increase in MVTR is larger as the hydrophilicity of the polymer resin decreases. Typically, hydrophilic characteristics of a polyurethane can be improved by introducing increasing amounts of oxyethylene units through the use of a polyol of polyoxyethylene as described in U.S. Patent 4,194,041 to Gore and U.S. Patent 4,532,316 to Henn as also in publications like those on page 1419 of volume 47 of Joumal of Applied Polymer Science by N. S. Schneider, J. L. IIIinger and F. E. Karansz. Hydrophilic polyurethane polymers are also commercially available in various forms - as solid resin, as a reactive prepolymer and as a solution in organic solvent or solvent mixtures.

The hydrophilic absorbent particles, as used in the present invention, are particles capable of swelling by absorbing a large volume of an aqueous liquid and assuming the form of a gel several times to several thousand times its own weight. The size of the absorbent-type particles are within a broad range of 0.1 to 300 micrometers when dry. Preferably, the particle size range of the water-swellable particles is 0.1 to 100 micrometers, depending on the film thickness needed for a given application. This invention is not limited in absorbent particles by their shape. The particles may be in the form of spheres, whiskers, platelets, granules and beads, for example.

The hydrophilic absorbent particles are insoluble in an aqueous environment but possess absorptive capacity greater than 1.0 (i.e. in the range of 1.0 to 500 grams), preferably greater than 10 grams of water per gram of dry particles. Examples of such absorbent particles include polyacrylic acid, cross-linked polyacrylic acid and salts thereof, polyacrylate-cellulose graft copolymer, polyacrylamide, hydrolyzed polyacrylamide, hydrolyzed polyacrylonitrile, neutralized starch-polyacrylic acid graft polymer, collagen, chitin, chitosan, dextran and cross-linked dextran derivatives, carboxymethyl cellulose and derivatives or mixtures of the aforementioned materials. The preferred materials are cross-linked polyacrylic acid salts.

In addition to hydrophilic absorbent particles, the polymer used to make the films may contain other inert diluent particles as fillers. Talc, silica, calcium carbonate, carbon black, titanium dioxide, are examples of such filler particles. Additionally, the polymer can also contain various additives like colorants, antioxidants, U.V. stabilizers, flame retardants, antiblocking agents, release agents and antistatic agents. Furthermore, depending on the particular end use, the polymer can also contain functional ingredients like odor-absorbing agents, anti-bacterial agents, fragrances, antifungal agents, hemostatic agents and wound-healing agents.

The water vapor permeable polymer film of this invention is obtained preferably by blending the absorbent particles with the polymer resin and then processing them to form useful articles like two-dimensional films, coatings or laminates and three-dimensional molded articles that are breathable, waterproof and air impermeable. The amount of absorbent particle blended into the polymer resin will depend on the level of increase in water vapor transmission rate desired for a particular application, the film thickness desired as well as the ability of the polymer resin to bind and retain the particles without losing the particles during use due to insufficient bond to the resin. A minimum amount of particles present will be an amount that results in an increase of the WVTR of the polymer film. Preferably the amount will be an amount that results in an increase in the MVTR of at least 10%.

The amount of absorbent particle will range from 0.1 to 50, preferably 0.1 to 25 parts per 100 parts of the resin by weight, more preferably in the range of 1 to 10 parts per 100 parts of the resin by weight. Depending on the physical properties of the polymer film, though the water vapor transmission rate will increase with the increase in the particle content, the mechanical integrity as reflected by the physical properties (like tensile strength, elongation, etc.) may begin to be adversely affected. The deterioration of the physical property of the polymer film will limit the maximum amount of particles that may be incorporated into a polymer resin. Moreover, poor mechanical integrity will adversely affect the handleability of the polymer film by making it susceptible to defects (like pin holes, micro cracks etc.) which will lead to air permeation through the film. In addition, excessive amounts of the hydrophilic particles will lead to having some of the particles not securely attached to the polymer resin thereby leading to creation of defects and loss of the particles from the polymer film in actual end-use.

When the absorbent particles are dispersed in a polymer resin, the size of the particles plays an important role in obtaining the polymer film of this invention. In order for the polymer film to be air impermeable, it is necessary that the hydrophilic absobent particles are at least partially embedded in the polymer resin such that at least one surface of the film is substantially smooth by being free of the particles. Therefore, the minimum thickness of the polymer film is controlled by the size of the particles. Larger the size of the hydrophilic particles used, higher would be the minimum thickness of the polymer film that will be air impermeable.

The particular technique used to make the polymer film of this invention will depend on the physical form of the polymer resin. In case of moisture curing prepolymer resins that are liquid under ambient conditions, the absorptive particles can be dispersed into the liquid prepolymer and the resulting liquid dispersion can be converted into a film. Similarly, for moisture curing prepolymers that are solid under ambient conditions, the absorbent particles are dispersed into a low viscosity melt of the prepolymer at an elevated temperature at which further processing is also conducted. Since some of these prepolymers react with moisture under ambient conditions and the particles are highly hydrophilic, the blend of such a prepolymer and the absorbent particles should be processed immediately before any significant reaction can occur between the prepolymer and the moisture absorbed by the particles thereby adversely affecting the processability of the mixture.

If the polymer resin is thermoplastic, the absorbent particles can be incorporated into the polymer resin by either melt blending or by solution blending. In case of melt blending, the thermoplastic polymer is heated to a temperature higher than the melt temperature of the polymer and the absorbent particles are then kneaded into the melt using conventional equipment like internal mixers, twin-screw extruders or two-roll mills. The resulting mix can then be fabricated into desired products like films and shaped articles by standard melt processing techniques like extrusion, calendaring, thermoforming, film-blowing, blow molding, injection molding. A restriction in melt processing is that the absorbent particles should not degrade at the processing temperature of the polymer melt.

In solution blending, the thermoplastic polymer resin is first dissolved in an organic solvent to obtain a homogeneous polymer solution. For example, thermoplastic polyurethanes can be dissolved in polar solvents like dimethylformamide, n-methyl pyrrolidone, dimethylacetamide and dimethylsulfoxide. The concentration of the polymer in the polymer solution will depend on the viscosity desired for a particular processing operation. Usually, the polymer concentration will vary between 5 and 40% by weight. Once the polymer solution is obtained, the absorbent particles are dispersed into the solution and the resulting mix is processed to obtain a wet film of the polymer composition which is then subsequently dried to eliminate the solvent and obtain a dry film of the polymer composition. In this method, the solvent selection must ensure that absorbent particles are not adversely affected by the organic solvent used.

The compositions made from prepolymer resins or solvated thermoplastic resins can be cast into films on a release substrate by using techniques like knife over roll coating, gravure roll coating to form a continuous non-porous film that is waterproof, air impermeable and water vapor permeable. In case of compositions comprised of prepolymers, the film is cured by reaction with ambient moisture or by unblocking the isocyanates at an elevated temperature or by subjecting it to radiation sources. In case of compositions comprising of solvated thermoplastic polymers, the film is dried by removing the organic solvent. In case of compositions comprising of thermoplastic polymers, a film can be obtained by using melt processing techniques like extrusion and film blowing.

Although the preferred method of obtaining the polymer film of this invention is to blend the polymer resin and the hydrophilic absorbent particles prior to fabrication, useful article can also be made by alternate methods. For example, a layered arrangement of the polymer resin and the absorbent particles can be used to fabricate useful products. In this case, a film of the polymer resin is first formed and the absorbent particles can then be uniformly distributed over the film while it is in a form capable of adhering to the particles.

The polymer film of this invention can be converted into useful articles by different techniques.

It is preferred that the film of this invention, particularly when the thickness is low, be combined with various substrates like fabrics and porous polymer membranes to provide improved mechanical integrity and handleability. In one case, the film can be laminated to fabrics on one side or on both sides to obtain a fabric laminate that is waterproof, breathable and air impermeable. To maintain breathability, the lamination should be done using a discontinuous pattern of the adhesive which can be in the form of powder, hot melt, reactive hot melt, solution, dispersion, or discontinuous net-like sheet. An example of a laminating technique using gravure roll technique and reactive hot melt adhesive can be found in U.S. Patent 4,532,316 to Henn.

Alternatively, the polymer film can be in the form of a coating deposited directly onto a fabric substrate in order to impart the functional attributes of waterproofness and air impermeability to the fabric while retaining the breathability of the coated fabric. Standard processing techniques like roll coating, spraying, dipping, etc. (for prepolymers and solvated thermoplastics) and like extrusion, calendaring, roll coating (for thermoplastic polymer compositions) can be used to form such coated fabric products.

In another variation, the polymer film described herein can be combined with porous polymer membrane substrates to form a composite laminate. By "porous" is meant pores from one side of an object to another. These membranes exhibit air permeability and as such impart, or do not impair, water vapor permeability. Examples of suitable polymers for making porous membranes include polyolefins, fluoropolymers, polyurethanes, polyesters, polyamides, polyketones, polysulfones, polycarbonates and the like. The preferred porous polymeric membranes are microporous polymers having a microscopic structure of open, interconnecting micro voids. A more preferred membrane is stretched, microporous polytetrafluoroethylene as described in U.S. Patent 3,953,566 and U.S. Patent 4,187,390, which membrane has a microstructure of nodes interconnected by fibrils.

Composite coatings can be made by a continuous non-porous coating of the polymer on the surface of the porous polymeric membrane substrate. The coating can be present substantially as a layer on the porous membrane substrate or it can be partially impregnated into the pores of the porous polymeric membrane. Various processing techniques can be used to make the coated substrate. For example, for polymer compositions based on prepolymers or solvated thermoplastic polymers, such composite films can be obtained by using the techniques described in U.S. Patent 4,194,041 and U.S. Patent 5,026,591. Furthermore, the coated substrates can be laminated to fabric substrates on one or both sides to form a waterproof, breathable fabric laminate that is air impermeable.

In another variation, a fabric laminate can be first prepared by laminating the porous polymer membrane to a fabric substrate that can be a woven, knitted or a non-woven fabric. The porous membrane surface of this laminate is then coated with the polymer composition of this invention and, if necessary, another fabric substrate can be bonded or laminated to the coated surface to obtain a fabric laminate which has fabric surfaces on both sides.

The planar two-dimensional products (film, composite laminates or coated fabrics and fabric laminates) of this invention can be converted into seamed articles of protective clothing using various techniques known in the art. Typically, such articles can be formed by placing two layers of the article of the invention on top of another and sealing them together in the desired position to create a waterproof seam. Sealing can be done by the use of conventional techniques like heat sealing, R.F. sealing, ultrasonic sealing, adhesive bonding and other methods known in the art like sewing and sealing the sewn seam with a waterproof adhesive tape.

The polymer films of this invention can also be in the form of three-dimensional seamless articles by using standard processing techniques appropriate for the physical form of the polymer composition and the particular shape of the desired article. For example, polymer films based on prepolymers and solvated thermoplastic polymer resins can be converted into shaped hollow thin walled articles by techniques such as dipping a non-porous preform or spraying on a non-porous preform to form a wet film of the polymer composition that is subsequently cured or dried. Solid shaped articles can be obtained by casting of these polymer compositions, but the thickness should be low enough for sufficient breathability. Similarly, polymer films based on thermoplastic polymer resins can be in the form of hollow thin-walled shaped articles using conventional techniques such as blow molding, thermoforming, rotational molding and injection molding.

The film of this invention as well as other products like laminated or coated products, coated fabrics , fabric laminates, shaped articles obtained by using the polymer film of this invention are waterproof, air impermeable and breathable. These functional properties make these products particularly useful as materials for articles of protective clothing providing comfort as well as protection from influences such as outdoor weather, from contamination in clean room environment, from infection in medical use, from hazardous liquids in chemical handling. Garments, suits, mittens, gloves, glove inserts, shoes, boots, socks, sock inserts, hats, caps, gowns, drapes are some examples of useful articles that can be made from the aforementioned products. Additionally, since the articles made using the polymer film and other products of this invention contain highly absorbent particles, they are capable of absorbing aqueous and body fluids as described in U.S. Patent 4,460,642 and U.S. Patent 5,098,775.

### TEST PROCEDURES

### Test for Water Absorption Capacity of Particles

The water absorption capacity of the absorbent particles was determined by adding 500 grams of distilled water to 0.5 grams of the particles, and after 30 minutes the mixture was filtered through an 80-mesh sieve (a no. 5 Whatman filter paper was used for cross-linked dextran particles) and the amount of filtrate was measured. The water absorption capacity in grams of water per gram of dry particles was reported as 2 x (500 - amount of filtrate).

### Test for Water Absorption of Polymer Resin

The water absorption of the polymer resin was determined according to ASTM D570 using an immersion period of 24 hours. The water absorption in reported as percentage of the original weight of the polymer resin.

### Waterproofness Test

The waterproofness of various samples was tested using a modified suter test apparatus, which is a low pressure hydrostatic challenge.

Water was forced against a film sample (covered with a woven taffeta fabric restraint) sealed by two rubber gaskets in a clamped arrangement. It is important that a leakproof seal is formed on the sample and the restraint by the clamp mechanism and the gaskets and sample. The restrained sample was open to atmospheric conditions. The water pressure on the sample was increased to 1 psi by a pump connected to a water reservoir, as indicated by an appropriate gauge and regulated by an in line valve. The test sample was at an angle and the water was recirculating to assure water contact and not air against the sample's lower surface. The upper surface of the restrained sample was visually observed for a period of at least 3 minutes for the appearance of any water which would be forced through the sample and the restraining fabric. Water drops seen on the surface was interpreted as a deficiency in the waterproofness of the sample. A passing grade was given for no water drops visible within 3 minutes.

In case of samples that are not free standing polymer films, no restraining fabric layer was used. The deficiency in waterproofness was attributed to visual observation of water droplets on the surface of the sample.

Depending on the size of the sample, three different test areas were used and will be referred to as WP1 (2.5 cm. diameter), WP2 (8.8 cm. diameter) and WP3 (10 cm. diameter).

### Test for Air Permeability

In order to measure their air permeability, samples were tested for Gurley Number, defined in this patent as the time in seconds for 100 cc of air to flow through 6.45 cm² of test material under a pressure drop of 1.2 kPa. The test device, a Gurley Densometer Model 4110, was employed in a method similar to Method A of ASTM D726-58. The sample was clamped into the testing device with a reinforcing mesh screen (150 microns) under the test sample to prevent rupture of the test sample. If no air flow was detected for 3 minutes, the sample was interpreted to be air impermeable.

### Water Vapor Transmission Test

Unless otherwise indicated, the water vapor transmission rate (WVTR) was determined using the following test method.

In this procedure, approximately 70 mls of a saturated salt solution of potassium acetate and distilled water was placed into a 133 mls polypropylene cup, having an inside diameter of 6.5 cm at the mouth. An expanded PTFE membrane, having a Gurley number of about 7 seconds, a bubble point of about 179 kPa, thickness of about 37 microns and a weight of about 20 gms/m², available from W. L. Gore & Associates of Newark, Delaware, was heat sealed to the lip of the cup to create a taut, leakproof, microporous barrier containing the salt solution. A similar expanded PTFE membrane was mounted taut on the surface of a water bath while ensuring that the membrane is in contact with the water in the bath. The water bath assembly was controlled at 23°C, plus or minus 0.2°C, utilizing a temperature controlled room and a water circulating bath.

The sample area for testing WVTR was approximately 7.5 cm. diameter. The sample was equilibrated in a room having a relative humidity of about 50% for a minimum of four hours. The sample was then placed on the surface of the expanded PTFE membrane covering the water bath. In case of coated membranes, coated fabric and fabric laminate samples, the substrate and not the coating was in contact with the expanded PTFE membrane covering the water bath.

The cup assembly was weighed to the nearest 1/1000 gm. and was placed in an inverted manner onto the center of the test sample.

Water vapor transport was provided by the driving force between the water and the saturated salt solution providing water vapor flux by diffusion in that direction. The sample was tested for 15 minutes and the cup assembly was then removed and weighed again to within 1/1000 gm.

The WVTR of the sample was calculated from the weight gain of the cup assembly and was expressed in grams of water per square meter of sample area per 24 hours. Several areas were tested within a sample and the average WVTR value is reported.

### EXAMPLES

### Example 1A

A hydrophilic polyurethane solution (SOLUCOTE TOP 932, a Tradename, comprised of about 42% solids content including about 4% silica particles with a water absorption of about 66%) was obtained from Soluol Chemical Co. To 37.7 grams of this solution, 0.79 grams (5 phr, i.e. parts per 100 parts of polymer resin) of a hydrophilic cross-linked polyacrylic acid salt, obtained from Nalco Chemical Co., with an absorption capacity of about 264 gm./gm. (Nalco® 1181) was added and stirred to uniformly disperse the salt particles into the solution. A film was then cast from this mixture on a release raper using a 10 mil setting on a 10.16 cm (4 inches) wide drawdown bar (BYK-Gardner, Inc.; Catalog.No. AR-5343) and dried under ambient conditions. The dried film was then heated in an oven at 155°C for 5 minutes to post-cure the film before peeling it off from the release paper for testing. The test results are provided in Table 1.

### Example 1B

To 36.8 grams of the hydrophilic polyurethane solution SOLUCOTE TOP 932, 1.55 grams (10 phr) of cross-linked dextran particles (Sephadex G-200-50 a Tradename from Sigma Chemical Co., with a particle size of 20-50 micrometers, and an absorption capacity of about 24 gm./gm.) was added and stirred to uniformly disperse the particles into the solution. A film was then cast from this mixture on a release paper using a 10 mil drawdown bar and dried under ambient conditions. The dried film was then heated in an oven at 155°C for 5 minutes to post-cure the film before peeling it off from the release paper for testing. The test results are provided in Table 1.

### Comparative Example 1

A film was obtained using the same procedure as in Example 1A except that no hydrophilic salt particles were added. Table 1 summarizes the test results for the films described in this comparative example and in Examples 1A and 1B. The results show an increase in WVTR due to addition of hydrophilic absorbent particles in films of comparable thicknesses without compromising the waterproofness and air impermeability..

### Example 2

This example demonstrate the use of melt blending to obtain the polymer film of this invention. The polymer resin used was a thermoplastic polyester polyurethane (weight average molecular weight of about 25000, specific gravity of about 1.18 and water absorption of about 1.2 %) obtained by reacting diphenylmethane diisocyanate (MDI) with polycaprolactone diol and using butane diol as the chain extender. The hydrophilic particle used was the cross-linked polyacrylic acid salt (Nalco® 1181) from Nalco Chemical Co., used in Example 1.

A Brabender Plasticorder® (PL-2000 from C.W.Brabender Instruments Inc.) torque rheometer was attached to a batch mixer (Prep-Mixer from C.W.Brabender Instruments Inc.) containing two roller blade elements. The mixer was preheated to 130°C and then 300 grams of the polyurethane resin was charged into the mixer with the blades rotating at 20 rpm. 30 grams of Nalco® 1181 particles were then gradually added to the mixer which was then allowed to run until the torque remained relatively unchanged with time. The mix was then taken out of the mixer, sheeted out on a two-roll mill and was then compression molded at 150°C into a film of about 0.38 mm (0.015 inch.) thickness. The film was tested and found to waterproof (WP1) and impermeable to air flow. Two areas within the sample were tested (as per ASTM E96-Method B) and the average WVTR was 28.5.

### Comparative Example 2

A film was made using the procedure described in Example 2 except that hydrophilic particles were not used. Tests showed the sample to be waterproof and impermeable to air flow. The average WVTR (as per ASTM E96-Method B) of two test areas within the sample was 15.5. This shows the increase in water vapor transmission rate due to the addition of hydrophilic absorbent particles.

### Example 3

A laminate comprising of an expanded microporous polytetrafluoroethylene (PTFE) membrane bonded to nylon taffeta fabric using a discontinuous pattem of moisture curing solvent-free polyurethane adhesive was obtained from W.L.Gore & Associates, Inc. The laminate was breathable (WVTR about 9000), waterproof (WP2) and air permeable (Gurley Number of about 40 - 50 seconds).

A 8.8% by weight solution was prepared by dissolving a thermoplastic hydrophilic coplyetherester polymer (Hytrel® HTR 8171 from E.I.Dupont de Nemours and Co.; water absorption of about 61%) in 1,1,2-trichloroethane at a temperature of 55°C to 60°C with stirring. To 50 grams of this solution, 0.425 grams (10 phr) of Nalco® 1181 particles was added and stirred to obtain a uniform dispersion. Using a 30 mil drawdown bar, a wet film was cast from the dispersion on the microporous PTFE surface of the laminate described above. The coated laminate was then dried under ambient conditions for at least 24 hours and then tested. The test results show that the coated laminate was waterproof (WP2),air impermeable and the average WVTR of four test areas within the sample was 5938.

### Comparative Example 3

A coated laminate was prepared using the procedure described in Example 3 except that no hydrophilic particles were used in the coating. The coated sample was both waterproof (WP2) and air impermeable, but the average WVTR of four test areas within the sample was only 5678.

### Example 4

This example describes a procedure to prepare a composite coated material of this invention.

A hydrophilic polyoxyethylene polyether polyurethane prepolymer was obtained by reacting excess diphenylmethane diisocyanate with a polyol containing polyoxyethylene units such that the prepolymer is a clear liquid (100% solids, solvent-free) under ambient conditions. The water absorption of a moisture cured film of this prepolymer was about 70%.

An expanded PTFE membrane was obtained from W. L. Gore & Associates, Inc. This membrane, similar to those described in U.S. Patent 3,953,566, is microporous in nature and is therefore both air permeable (Gurley number of about 10-15 secs.) and moisture vapor permeable (WVTR greater than 50,000) while being waterproof (WP3).

To 162.6 grams of the hydrophilic polyurethane prepolymer, 8.1 grams (5 phr) of Nalco® 1181 particles was added and the mix was mechanically stirred under ambient conditions to uniformly disperse the particles into the liquid prepolymer. Immediately, the expanded PTFE membrane was coated with this polymer composition. This was achieved by gravure printing about 8-10 gm/m² of the polymer composition onto the surface of the membrane and then passing it through a nip roll to smear the polymer composition to form a continuous non-porous film on the membrane surface while partially impregnating the polymer composition into the pores of the membrane. The coated membrane (composite coated material) was then allowed to cure by reacting with the ambient moisture for at least 48 hours. The cured composite coated material was then tested and the results are provided in Table 2.

### Comparative Example 4

A composite coated material was obtained using the procedure described in Example 4 except the material contained no absorbent particles.

### Example 5

A laminate was prepared by laminating the composite coated material described in Example 4 to a 50.86 g/m² (1.5 oz/yd²) tricot knit fabric using a procedure similar to that described in Example 6 of U.S. Patent 4,532,316. A solvent free polyurethane adhesive was deposited onto the coated surface of the composite coated material in a dot pattem using a gravure roll heated at 105°C. The fabric layer was then attached by feeding it along a moving belt of the composite structure and pressing the package between a nip formed by a metal roll and a rubber roll. The laminate produced was wound on a core and allowed to cure with ambient moisture for at least 48 hours. After curing, the laminate was tested and the test results are shown in Table 3.

### Comparative Example 5

A laminate was prepared using the same procedure described in Example 5 except the composite coated material used was that described in Comparative Example 4.

Table 3 lists the test results for the laminates described in Example 5 and Comparative Example 5. The results indicate the increase in the MVTR of the laminate due to the presence of hydrophilic absorbent particles without compromising the other functional laminate properties of waterproofness and air impermeability.

### Example 6

A laminate of PTFE and taffeta fabric similar to that used in Example 3 was used in this example. Using a 5 mil drawdown bar, a continuous film was cast from the hydrophilic polyurethane prepolymer of Example 4 on the microporous PTFE surface of the laminate. On top of the cast polyurethane film, particles of an acrylic resin (Salsorb 88 from Allied Colloids Inc., water absorption capacity of about 496 gm./gm. and particle size of 90 to 850 micrometers) were manually sprinkled in a uniform manner. The entire package was then allowed to cure by reacting with ambient moisture. After curing, the coated laminate was tested and the average water vapor transmission rate of three test areas within the sample was 3076.

### Comparative Example 8

A coated laminate was prepared using the procedure described in Example 6 except that no Salsorb 88 particles were sprinkled onto the cast polyurethane prepolymer film. The average water vapor transmission rate of three test areas within the coated laminate was 2064.

**TABLE 1**

| Polymer Resin:Hydrophilic polyurethane (SOLUCOTE TOP 932) Physical Form Used:Solution (about 42% by weight in toluene/dimethylformamide mixture) | | | | | | |
|---|---|---|---|---|---|---|
| **Example** | **Absorbent Particle** | **Amount of Particle (phr)** | **Film Thickness mm (inches)** | **Average WVTR Of Three Test Areas** | **Air Permeability** | **Waterproofness, (WP2)** |
| Comparative Example 1 | ― | 0.0 | 0.0686 (0.0027) | 5583 | Impermeable | Pass |
| Example 1A | Nalco® 1181 | 5.0 | 0.0813 (0.0032) | 7194 | Impermeable | Pass |
| Example 1B | Sephadex G-200-50 | 10.0 | 0.0762 (0.0030) | 6730 | Impermeable | Pass |

**Table 2**

| **Example** | **Average WVTR Of Four Test Areas** | **Waterproofness, WP3** | **Air Permeability** |
|---|---|---|---|
| Comparative Example 4 | 14241 | Pass | Impermeable |
| Example 4 | 15420 | Pass | Impermeable |

**Table 3**

| **Example** | **Average WVTR of Five Test Areas** | **Waterproofness, WP3** | **Air Permeability** |
|---|---|---|---|
| Comparative Example 5 | 9362 | Pass | Impermeable |
| Example 5 | 10895 | Pass | Impermeable |

## Claims

1. A waterproof, air impermeable and water vapor permeable non-porous continuous polymer film comprising:
(a) a water vapor permeable, waterproof, nonporous, air-impermeable polymeric resin film; and
(b) hydrophilic absorbent particles, at least partially embedded in said resin film, that are insoluble in water and which have an absorption capacity greater than 1 gram of water per gram of dry particles;
the amount of the hydrophilic particles being 0.1 to 50 parts per 100 parts of the polymeric resin.

2. The polymer film of claim 1 wherein the WVTR is at least 10% higher than that of a film of a comparable thickness of the polymer resin containing no hydrophilic particles.

3. The polymer film of claim 1 or claim 2 wherein the said polymeric resin is selected from the class consisting of polyurethanes, copolyetheresters, copolyetheresteramides, and derivatives or mixtures thereof.

4. The polymer film of any preceding claim wherein the said hydrophilic absorbent particles are selected from the groups consisting of polyacrylic acid, cross-lined polyacrylic acid and salts thereof, polyacrylate-cellulose graft copolymer, polyacrylamide, hydrolyzed polyacrylamide, hydrolyzed polyacrylonitrile, starch-polyacrylic acid graft polymer, collagen, chitin, chitosan, dextran and cross-linked dextran derivative, carboxymethyl cellulose and derivatives or mixtures of the aforementioned materials.

5. The polymer film of any preceding claim wherein said polymeric resin also contains a filler.

6. A laminate comprising the film of any preceding claim on a substrate.

7. The laminate of claim 6 wherein the substrate is a fabric.

8. The laminate of claim 6 wherein the substrate is a porous polymer membrane.

9. the laminate of claim 8 wherein the porous polymer membrane is microporous stretched polytetrafluoroethylene.

10. A coated composite comprising a deposited coating on a substrate, said coating being a polymeric resin with hydrophilic absorbent particles at least partially embedded therein, said particles having an absorptive capacity greater than 1 gram of water per gram of dry particles, the amount of the hydrophilic particles being 0.1 to 50 parts per 100 parts of the polymeric resin.

11. The coated composite of claim 10 wherein the polymeric resin is selected from the class consisting of polyurethanes, copolyetheresters, copolyetheresteramides, and derivatives or mixtures thereof.

12. The coated composite of claim 10 or claim 11 wherein the hydrophilic absorbent particles are selected from the class consisting of polyacrylic acid, cross-linked polyacrylic acids and salts thereof, polyacrylate-cellulose graft copolymer, polyacrylamide, hydrolyzed polyacrylamide, hydrolyzed polyacrylonitrile, starch-polyacrylic acid graft polymer, collagen, chitin chitosan, dextran and cross-linked dextran derivatives, carboxymethyl cellulose and derivatives or mixtures of the aforementioned materials.

## Patentansprüche

1. Wasserdichter, luftundurchlässiger und wasserdampfdurchlässiger, nichtporöser, kontinuierlicher Polymerfilm, welcher umfaßt:
(a) einen wasserdampfdurchlässigen, wasserdichten, nichtporösen, luftundurchlässigen Polymerharzfilm und
(b) hydrophile Absorptionsmittelpartikel, die zumindest teilweise in dem Harzfilm eingebettet sind, in Wasser unlöslich sind und ein Absorptionsvermögen von mehr als 1 Gramm Wasser pro Gramm trockene Partikel haben, wobei die Menge der hydrophilen Partikel 0,1 bis 50 Teile pro 100 Teile Polymerharz beträgt.

2. Polymerfilm nach Anspruch 1, wobei der WVTR mindestens 10% höher als der eines Films mit vergleichbarer Dicke des Polymerharzes ist, der keine hydrophilen Partikel enthält.

3. Polymerfilm nach Anspruch 1 oder 2, wobei das Polymerharz aus der Klasse ausgewählt ist, die aus Polyurethanen, Copolyetherestern, Copolyetheresteramiden und Derivaten oder Mischungen davon besteht.

4. Polymerfilm nach einem der vorstehenden Ansprüche, wobei die hydrophilen Absorptionsmittelpartikel aus der Gruppe ausgewählt sind, die aus Polyacrylsäure, vernetzter Polyacrylsäure und Salzen davon, einem Polyacrylat-Cellulose-Pfropfcopolymer, Polyacrylamid, hydrolysiertem Polyacrylamid, hydrolysiertem Polyacrylnitril, einem Stärke-Polyacrylsäure-Pfropfpolymer, Collagen, Chitin, Chitosan, Dextran und einem vernetzten Dextran-Derivat, Carboxymethylcellulose und Derivaten oder Mischungen der oben genannten Materialien besteht.

5. Polymerfilm nach einem der vorstehenden Ansprüche, wobei das Polymerharz auch einen Füllstoff enthält.

6. Laminat, das einen Film nach einem der vorstehenden Ansprüche auf einem Substrat umfaßt.

7. Laminat nach Anspruch 6, wobei das Substrat ein Textilmaterial ist.

8. Laminat nach Anspruch 6, wobei das Substrat eine poröse Polymermembran ist.

9. Laminat nach Anspruch 8, wobei die poröse Polymermembran mikroporöses, gedehntes Polytetrafluorethylen ist.

10. Beschichtetes Verbundmaterial, das eine auf einem Substrat aufgebrachte Beschichtung umfaßt, wobei die Beschichtung ein Polymerharz mit hydrophilen Absorptionsmittelpartikeln ist, die mindestens teilweise darin eingebettet sind, wobei die Partikel ein Absorptionsvermögen von mehr als 1 Gramm Wasser pro Gramm trockene Partikel haben und die Menge der hydrophilen Partikel 0,1 bis 50 Teile pro 100 Teile Polymerharz beträgt.

11. Beschichtetes Verbundmaterial nach Anspruch 10, wobei das Polymerharz aus der Klasse von Polyurethanen, Copolyetherestern, Copolyetheresteramiden und Derivaten oder Mischungen davon ausgewählt ist.

12. Beschichtetes Verbundmaterial nach Anspruch 10 oder Anspruch 11, wobei die hydrophilen Absorptionsmittelpartikel aus der Klasse ausgewählt sind, die aus Polyacrylsäure, vernetzten Polyacrylsäuren und Salzen davon, einem Polyacrylat-Cellulose-Pfropfcopolymer, Polyacrylamid, hydrolysiertem Polyacrylamid, hydrolysiertem Polyacrylnitril, einem Stärke-Polyacrylsäure-Pfropfpolymer, Collagen, Chitin, Chitosan, Dextran und vernetzten Dextran-Derivaten, Carboxymethylcellulose und Derivaten oder Mischungen der oben genannten Materialien besteht.

## Revendications

1. Film polymère continu non poreux imperméable à l'eau, imperméable à l'air et perméable à la vapeur d'eau, comprenant :
(a) un film de résine polymère perméable à la vapeur d'eau, imperméable à l'eau, non poreux, imperméable à l'air ; et
(b) des particules absorbantes hydrophiles, au moins partiellement intégrées dans ladite résine, qui sont insolubles dans l'eau et qui ont une capacité d'absorption supérieure à 1 gramme d'eau par gramme de particules sèches ; la quantité de particules étant de 0,1 à 50 parties pour 100 parties de résine polymère.

2. Film polymère de la revendication 1 dans lequel le WVTR (water vapor transmission rate, taux de transmission de la vapeur d'eau) est supérieure d'au moins 10% à celui d'un film d'épaisseur comparable de la résine de polymère ne contenant pas de particules hydrophiles.

3. Film polymère de la revendication 1 ou de la revendication 2, dans lequel ladite résine polymère est choisie dans l'ensemble constitué de polyuréthanes, de copolyétheresters, de copolyétherestéramides et de leurs dérivés ou mélanges.

4. Film polymère de l'une quelconque des revendications précédentes, dans lequel lesdites particules absorbantes hydrophiles sont choisies dans les ensembles constitués d'acide polyacrylique, d'acide polyacrylique réticulé et de leurs sels, de copolymère obtenu par greffage de polyacrylate-cellulose, de polyacrylamide, de polyacrylamide hydrolysé, de polyacrylonitrile hydrolysé, de polymère obtenu par greffage d'amidon-acide polyacrylique, de collagène, de chitine, de chitosane, de dextrane et de dérivé de dextrane réticulé, de carboxyméthylcellulose et de dérivés et de mélanges des matériaux mentionnés ci-dessus.

5. Film polymère de l'une quelconque des revendications précédentes, dans lequel ladite résine polymère contient également une charge.

6. Stratifié comprenant le film de l'une quelconque des revendications précédentes sur un substrat.

7. Stratifié de la revendication 6, dans lequel le substrat est un tissu.

8. Stratifié de la revendication 6, dans lequel le substrat est une membrane polymère poreuse.

9. Stratifié de la revendication 8, dans lequel la membrane polymère poreuse est en polytétrafluoroéthylène étiré microporeux.

10. Composite revêtu comprenant un revêtement déposé sur un substrat, ledit revêtement étant une résine polymère avec des particules absorbantes au moins partiellement intégrées dedans, lesdites particules ayant une capacité d'absorption supérieure à 1 gramme d'eau par gramme de particules sèches, la quantité de particules hydrophiles étant de 0,1 à 50 parties par 100 parties de la résine polymère.

11. Composite revêtu de la revendication 10, dans lequel la résine polymère est choisie dans l'ensemble constitué de polyuréthanes, de copolyétheresters, de copolyétherestéramides et de leurs dérivés ou mélanges.

12. Composite revêtu de la revendication 10 ou de la revendication 11, dans lequel lesdites particules absorbantes hydrophiles sont choisies dans les ensembles constitués d'acide polyacrylique, d'acides polyacryliques réticulés et de leurs sels, de copolymère obtenu par greffage de polyacrylate-cellulose, de polyacrylamide, de polyacrylamide hydrolysé, de polyacrylonitrile hydrolysé, de polymère obtenu par greffage d'amidon-acide polyacrylique, de collagène, de chitine, de chitosane, de dextrane et de dérivés de dextrane réticulé, de carboxyméthylcellulose et de dérivés et de mélanges des matériaux mentionnés ci-dessus.
